(19) Europäisches Patentamt / European Patent Office / Office européen des brevets

(11) **EP 3 238 875 B1**

(12) **EUROPEAN PATENT SPECIFICATION**

(45) Date of publication and mention
of the grant of the patent:
**31.01.2018 Bulletin 2018/05**

(51) Int Cl.:
***B23Q 17/22*** *(2006.01)*    ***G01B 21/04*** *(2006.01)*

(21) Application number: **14896960.3**

(22) Date of filing: **29.12.2014**

(86) International application number:
**PCT/CN2014/095273**

(87) International publication number:
**WO 2016/101289 (30.06.2016 Gazette 2016/26)**

(54) **FIVE-AXIS MACHINE TOOL CUTTER POSTURE AND CUTTER TIP POSITION ERROR SYNCHRONOUS DETECTION MECHANISM**

SYNCHRONER DETEKTIONSMECHANISMUS FÜR WERKZEUGPOSITION UND WERKZEUGSPITZENFEHLPOSITION EINER FÜNFACHSIGEN WERKZEUGMASCHINE

MÉCANISME DE DÉTECTION SYNCHRONE D'ERREUR DE POSITION DE POINTE DE DISPOSITIF DE COUPE ET DE POSITION DE DISPOSITIF DE COUPE DE MACHINE-OUTIL À CINQ AXES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2014 CN 201410811379**

(43) Date of publication of application:
**01.11.2017 Bulletin 2017/44**

(73) Proprietor: **University Of Electronic Science And Technology Of China**
**Chengdu, Sichuan 611731 (CN)**

(72) Inventors:
• **DING, Jiexiong**
  **Chengdu**
  **Sichuan 611731 (CN)**
• **ZHOU, Zhipeng**
  **Chengdu**
  **Sichuan 611731 (CN)**
• **LIU, Fumin**
  **Chengdu**
  **Sichuan 611731 (CN)**
• **DU, Li**
  **Chengdu**
  **Sichuan 611731 (CN)**
• **WANG, Wei**
  **Chengdu**
  **Sichuan 611731 (CN)**
• **JIANG, Zhong**
  **Chengdu**
  **Sichuan 611731 (CN)**
• **SONG, Zhiyong**
  **Chengdu**
  **Sichuan 611731 (CN)**
• **JIANG, Jinmao**
  **Chengdu**
  **Sichuan 611731 (CN)**
• **HUANG, Zhi**
  **Chengdu**
  **Sichuan 611731 (CN)**
• **DENG, Meng**
  **Chengdu**
  **Sichuan 611731 (CN)**

(74) Representative: **Sun, Yiming**
**HUASUN Patent- und Rechtsanwälte**
**Friedrichstraße 33**
**80801 München (DE)**

(56) References cited:
EP-A1- 2 390 622    CN-A- 102 079 054
CN-A- 102 259 277    CN-A- 102 962 728
CN-A- 102 962 728    CN-A- 103 206 932
CN-A- 103 878 641    FR-A1- 2 928 289
JP-A- 2010 108 085

## Description

TECHNICAL FIELD

The invention relates to a detecting mechanism for detecting kinematic accuracy of five-axis CNC(Computer Numerical Control) machine tool, specially involves a synchronous detecting mechanism for the tool posture and tool tip position error of five-axis CNC machine tool with the function of RTCP (Rotation tool center point).

BACKGROUND TECHNOLOGY OF THE INVENTION

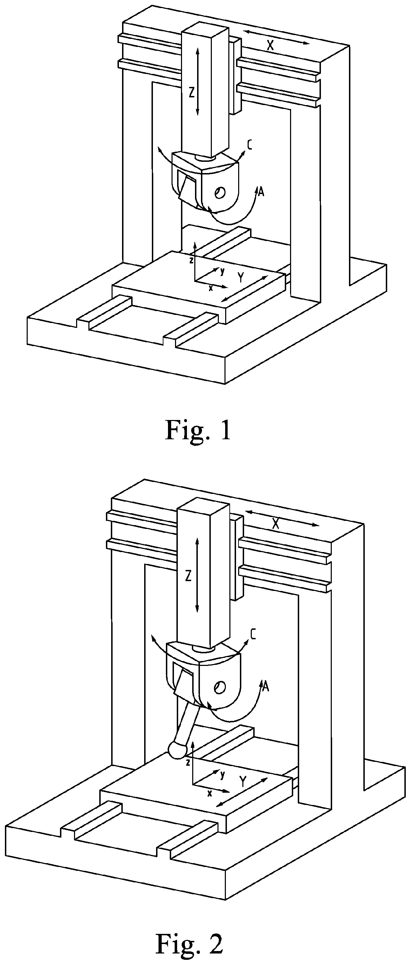

CNC machine tools are the foundation of modem machinery manufacturing industry, and its accuracy will directly affect the quality of processed products. By adding two rotation axes to traditional three-axis CNC machine tool, five-axis CNC machine tool gets the ability of machining complex spatial curved surfaces. According to various topological structures, five-axis CNC machine tools can be classified into double swing heads (shown in Fig. 1), dual rotary tables, table-head rotating and other types. With the excellent properties of machining complex spatial curved surfaces, five-axis CNC machine tools are widely used in the machining of high removal rate and high accuracy work piece, such as aircraft parts, vane wheel, propeller, etc. They also have significant influence in aviation and aerospace, precision instrument and other fields.

Because of the application of two rotation axes, the detection of the kinematic accuracy of five-axis CNC machine tool has become more difficult. How to estimate whether a five-axis CNC machine tool meets the accuracy requirements is a hot point in the field of current machine tool detection. However, some traditional accuracy detecting instruments (such as laser interferometer, double-ball-bar, laser tracker, etc), the limitation in the precision measurement of multi-axis machine tools becomes more obvious gradually. Now most advanced five-axis CNC machine tools have been equipped with the function of RTCP (rotating around the tool center point). When the machine tool tip is static, the function of RTCP is used to perform multi-axis synchronous movement so as to measure accurately the kinematic error of machine tool tip in the process of five-axis synchronous movement and learn the machining accuracy condition of machine tools. Based on the function of RTCP, a new type of accuracy detecting instrument which is called R-test has been developed for the kinematic accuracy of five-axis CNC machine tools. The detector uses universal ball-end mandrel. Through three linear displacement sensors measuring the spatial displacement of the center of the ball-end tool installed in the tool chuck, to reflect the positional error of machine tool tip during the process of multi-axis linkage movement. But the detector of R-test can only be used to measure the displacement error of five-axis CNC machine tool tip in three axial orientations and it's impossible to measure the tool posture of five-axis CNC machine tool. Here, the tool posture of five-axis CNC machine tool consists of the swing angle $\eta$ and the rotation angle $\theta$. The swing angle $\eta$ means the angle of the tool deviating from Z axis of the worktable coordinate system, and the rotation angle $\theta$ means the angle of the tool rotates around Z axis. To a certain extent, it will increase the inaccuracy of measurement results, as shown in Fig. 2.

The application documents with the publication number EP2390622 disclosed a measuring device serves to detect spatial displacements of the movement axes of a machine to be tested. The measuring device comprises a holder on which a plurality of length measuring systems are arranged. The spatial arrangement of the length measuring systems on the holder is designed for measuring a distance from a measuring body in different spatial direction. In the measurement, the length measuring systems are length measuring probes which are oriented to a common intersection point. The length measuring probes touch the surface of the measuring body clamped in a tool holder, in particular in the form of a measuring ball, so that the spatial displacement of the measuring ball and the TCP is detected by several length measurements. If the machine to be tested is a machine tool, the measuring ball can be fixed, in particular clamped, to the tool holder via a clamping shaft on the tool holder and the measuring device on the machine table. However, the measuring device mentioned above only detects spatial displacements of movement axes of a machine to be tested by the direction of the length measuring systems; and it's impossible to detect the tool's spatial position error and the tool posture of the machine tool, including the swing angle, the rotation angle.

CONTENT OF INVENTION

In order to solve the problem that existing detecting instruments cannot measure the spatial position error of machine tool tip meanwhile measuring the swing angle and rotation angle of tool, a synchronous detecting mechanism for the tool posture and tool tip position error of five-axis machine tool is provided in the invention. The detecting mechanism will concurrently detect the spatial position error, swing angle and rotation angle of machining tool.

In order to achieve the above purpose, the technical solution adopted by this invention is described as below.

A synchronous detecting mechanism for the tool posture and tool tip position error of five-axis machine tool comprises, a mounting device connected with an external machine tool, used to position and install each measuring device and the following-up platform, wherein a mounting platform is provided in the mounting device; a following-up platform used to form an orthogonal three axial displacement platform, and the following-up platform mounted on the lower table of the mounting platform; a rotation angle measuring device used to measure the rotation angle of the machine tool under test, and the rotation angle measuring device installed on the following-up platform; a swing angle measuring device used to measure the swing angle of the machine tool under test, wherein the lower part of the spherical connector in the swing angle measuring device is fixedly connected with the upper part of the rotation angle measuring device, and during the test, the upper part of the swing angle measuring device is connected to the tool chuck of the machine tool under test; a spatial displacement measuring device used to measure the micro-displacement of the machine tool tip under test in three orthogonal axes, the spatial displacement measuring device installed on the upper table of the mounting platform.

The rotation angle measuring device consists of a first photoelectric coder and a connecting shaft. The first photoelectric coder is used to measure the rotation angle of the connecting shaft. The upper end of the connecting shaft is fixedly connected with the lower part of the swing angle measuring device, and the lower end of the connecting shaft is fixedly connected with the first photoelectric coder. The connecting shaft is installed on the following-up platform. Furthermore, the connecting shaft is installed on the connecting shaft installing base via a pair of first bearings; the connecting shaft installing base is fixedly installed on the following-up platform; a locking sleeve and a connecting shaft collar are respectively sheathed on the connecting shaft and used for axial positioning of the first bearings.

The swing angle measuring device includes a second photoelectric coder, a mandrel, a spherical connector and a swing shaft. The second photoelectric coder measures the rotation angle of the mandrel. The spherical connector is used to install the mandrel and the swing shaft. The mandrel is installed horizontally in the spherical connector while one end of the swing shaft is fixed on the mandrel and their axes are perpendicular. During test, the free end of the swing shaft is fixedly connected to the tool chuck of the machine tool under test, and the axes of the swing shaft is through the center of spherical connector. The spherical connector is fixedly connected to one end of the connecting shaft. Furthermore, the mandrel is installed in the spherical connector via two second bearings. Two bearing caps of two second bearings are installed separately at the two ends of the mandrel to limit the axial displacement of the mandrel. The axial position of the swing shafts adjusted by a collar is placed at the intersection point of the axes of the mandrel and the swing shaft which coincides with the center of the spherical connector.

The spatial displacement measuring device consists of three displacement measurement units with the same pattern which are mounted evenly on the same circle of the upper table of the mounting platform. The displacement measurement unit consists of a fixed dip angle base and a displacement sensor. The fixed dip angle base is fixedly placed on the upper table of the mounting platform; and the displacement sensor is fixed on the fixed dip angle base. The measuring head of the displacement sensor contacts with the spherical connector, and the sensor's axis extends through the center of spherical connector. A contact plate is further placed between the measuring head of the displacement sensor and the spherical connector; the contact plate is installed on the fixed dip angle base by a flexible hinge.

The mounting device further includes a locating ring and several positioning keys. The three fixed dip angle bases are fixed at the same circle of the upper table of the mounting platform by the locating ring, and the fixed dip angle bases are located evenly at the circle with the positioning keys.

The following-up platform consists of a platform base, a Y-direction moving member, a X-direction moving member, a Z-direction sliding table base and a Z-direction moving member. The platform base is fixed on the lower table of the mounting platform. The Y-direction moving member is mounted on the platform base. The X-direction moving member is mounted on the Y-direction moving member. The Z-direction sliding table base is fixedly placed on the X-direction moving member. The Z-direction moving member is mounted on the Z-direction sliding table base. The connecting shaft installing base is fixedly placed on the Z-direction moving member. Furthermore, the platform base is fixed on the lower table of the mounting platform with a supporting plate of the following-up platform and a filling plate. The supporting plate of the following-up platform is fixed on the lower table of the mounting platform; and the filling plate is fixed on the supporting plate of the following-up platform. The platform base is fixed on the filling plate. The Z-direction sliding table base is fixed on the moving part along the X-direction moving member with the L-shaped supporting base.

The beneficial effects of the synchronous detecting mechanism for the tool posture and tool tip position error of five-axis machine tool provided by the present invention are as follows:

(1) For advanced five-axis CNC machine tools, the actual motion of the ball-end mandrel in traditional RTCP testing process includes spatial movement, swing and rotation several forms of exercise; the present invention separates the swinging motion from spatial movement and rotational motion by the way of setting a mandrel inside the spherical connector; this setup can not only ensure the measurement of the tool swing angle but also avoid the interference on the measurement of other motion;

(2) The present invention employs a following-up platform with three orthogonal axes to follow the spatial movement of ball head and by means of the photoelectric coder installed on the following-up platform to measure the rotation angle of the connecting shaft (equivalent to the rotation angle of the spherical connector); this setup can ensured that the measurement of the rotation angle of spherical connector's center won't be affected by the movement of the center;

(3)In the RTCP test of five-axis CNC machine tools, the present invention device can measure real-time the spatial movement error, swing angle and rotation angle of the machine tool synchronously; the information covers fully the tool posture and tool tip position error of tool tip so that the trouble from delay in recording is eliminated;

(4)In the present invention, the mounting platform is a monolithic structure; and other components connected with the mounting platform are focused on at the top and bottom of the mounting platform where are easy to surface finishing; this setup is can ensure the coaxiality, planeness of the upper and lower mounting flat of the mounting platform, reduce the difficulty of the manufacture, and reduce the cost of the equipment; meanwhile it is more conducive to locate during the subsequent testing process and improve accuracy.

BRIEF DESCRIPTION OF THE FIGURES

Fig. 1 shows a perspective view of an embodiment of five-axis CNC machine tool with double swing (AC) spindle.

Fig. 2 shows a graph that depicts the traditional test on RTCP for five-axis CNC machine tool with double swing (AC) spindle.

Fig. 3 shows a perspective view of an embodiment of a synchronous detecting mechanism for the tool posture and tool tip position error of five-axis machine tool according to the invent.

Fig. 4 shows a partial cross-section of the embodiment depicted in Fig. 3.

Fig. 5 shows a full cross-section of the embodiment depicted in Fig. 3, taken along the vertical direction.

Fig. 6 shows a perspective decomposition view of the following-up platform.

Fig. 7 shows a cross-section of the swing angle measuring device.

Fig. 8 shows a top view of an embodiment of the displacement measurement units on the circle.

Fig. 9 shows a graph that depicts the positioning and mounting of the spatial displacement measuring device.

Fig. 10 shows a graph that depicts the transformation of two spatial rectangular coordinate systems which are named as O-XYZ and O'-X'Y'Z'.

Fig. 11 shows a local coordinate system of the spatial displacement measuring device in the detecting mechanism.

Fig. 12 shows a coordinate system obtained through the coordinate system rotating a anti-clockwise angle of $\beta$ around the Y-axis in figure 11. Fig. 13 shows a coordinate system obtained through the coordinate system rotating a anti-clockwise angle of $\alpha$ around the X'-axis in figure 12.

List of reference numerals:

| | | | |
|---|---|---|---|
| $\theta$ | rotation angle | $\eta$ | swing angle |
| 1 | mounting device | | |
| 11 | mounting platform, | 12 | locating ring, |
| 13 | positioning key, | 14 | connecting bolt, |
| 2 | following-up platform | | |
| 21 | first bolt, | 22 | supporting plate of the following-up, |
| 23 | filling plate, | 24 | second bolt, |
| 25 | third bolt, | 26 | platform base, |
| 27 | fourth bolt, | 28 | Z-direction sliding table base, |
| 29 | Z-direction moving member, | | |
| 210 | L-shaped supporting base, | 211 | X-direction moving member, |
| 212 | Y-direction moving member, | | |
| 3 | spatial displacement measuring device | | |
| 30 | displacement measurement unit | | |
| 31 | contact plate, | 32 | flexible hinge, |
| 33 | fix dip angle base, | 34 | displacement sensor, |
| 4 | swing angle measuring device | | |
| 41 | second photoelectric coder, | 42 | left bearing cap, |
| 43 | mandrel, | 44 | spherical connector, |
| 45 | swing shaft, | 46 | fastening bolt, |
| 47 | collar, | 48 | second bearing, |

(continued)

| | | | |
|---|---|---|---|
| | 49 | right bearing cap, | |
| | 5 | rotation angle measuring device | |
| | 51 | first photoelectric coder, | 52 locking sleeve, |
| | 53 | connecting shaft collar, | 54 connecting shaft installing base, |
| | 55 | first bearing, | 56 connecting shaft, |
| | 57 | hexagon socket shoulder screw. | |

DETAILED DESCRIPTION

Referring to these drawings, the details of the present invention will be further described.

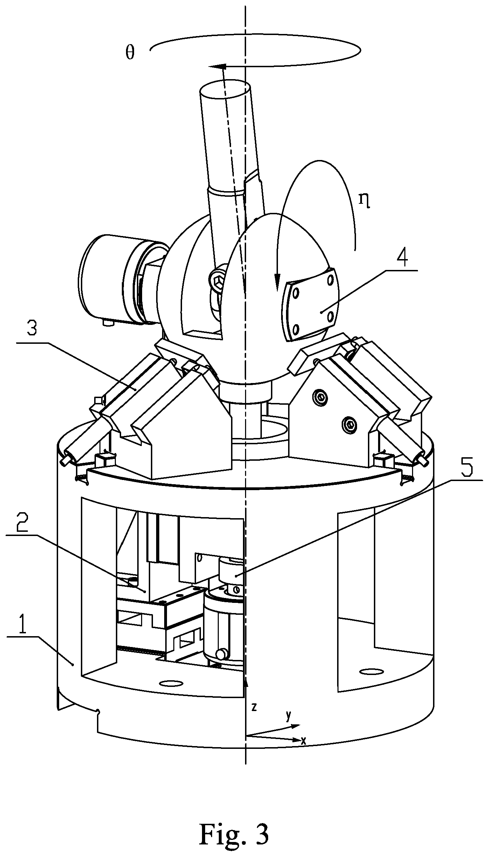

As shown in Fig. 3, the synchronous detecting mechanism for the tool posture and tool tip position error of five-axis machine tool consists of a mounting device 1, a following-up platform 2, a spatial displacement measuring device 3, a swing angle measuring device 4 and a rotation angle measuring device 5.

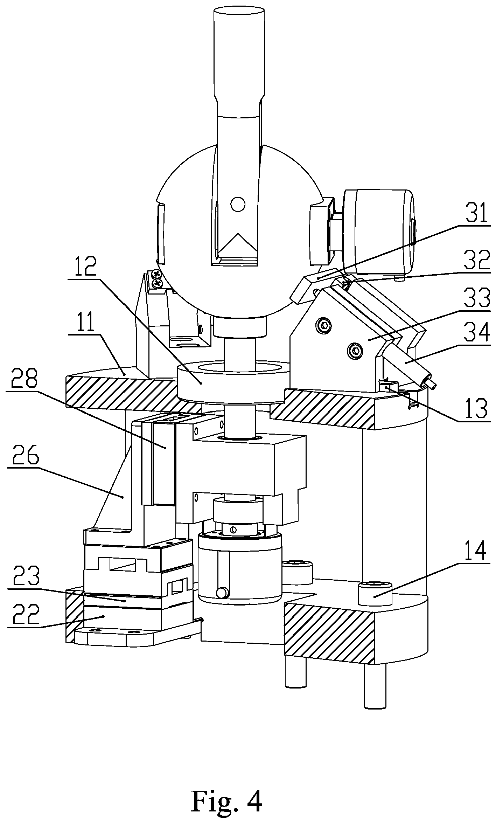

The mounting device 1 is used to position and mount each measuring device and the following-up platform 2, meanwhile it is base to connect with the external machine tool. As shown in Fig. 4, the mounting device 1 mainly includes a mounting platform 11, a locating ring 12, several positioning keys 13 and a connecting bolt 14. The mounting platform 11 is the base to place the spatial displacement measuring device 3 and the following-up platform 2. The mounting platform 11 is divided into two layers, the upper table and the lower table. In order to ensure the axiality of two layers, the mounting platform 11 is designed as a monolithic structure. The locating ring 12 is adopted as radial positioning part, and several positioning keys 13 are adopted as tangential positioning parts. The connecting bolt 14 is used to connect the detecting system with the external machine tool platform.

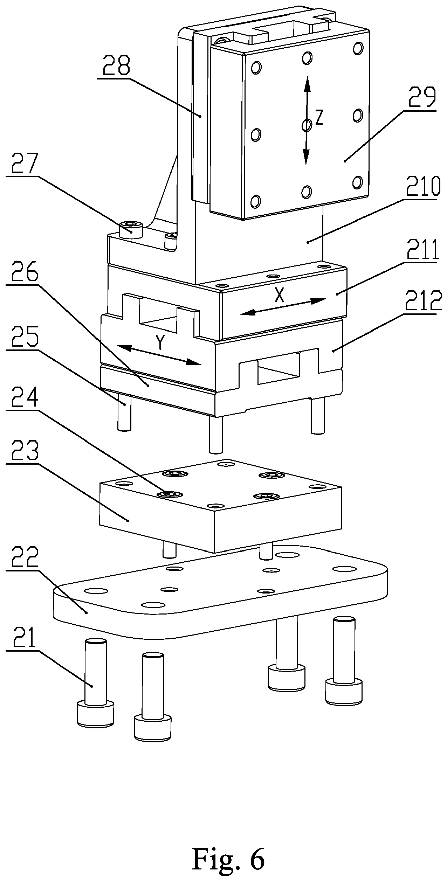

The following-up platform 2, which is a precision orthogonal tri-axial displacement platform, is placed on the lower table of the mounting platform 11. As shown in Fig. 4 and Fig. 6, the following-up platform 2 comprises several first bolts 21, a supporting plate of follow-up platform 22, a filling plate 23, several second bolts 24, several third bolts 25, a platform base 26, several fourth bolts 27, a Z-direction sliding table base 28, a Z-direction moving member 29, a L-shaped supporting base 210, a X-direction moving member 211, and a Y-direction moving member 212. The Y-direction moving member 212 is mounted on the platform base 26; as shown in Fig.6, the parallel tracks on the top of the platform base 26 and the groove at the bottom of the Y-direction moving member 212 slide fit to implement the detecting system free movement along the Y direction. The X-direction moving member 211 is mounted on the Y-direction moving member212; as shown in Fig.6, the parallel tracks on the top of the Y-direction moving member 212 and the groove at the bottom of the X-direction moving member 211 slide fit to implement the detecting system free movement along the X direction. The L-shaped supporting base 210 is fixed on the X-direction moving member 211 by the fourth bolts 27. The Z-direction sliding table base 28 is placed on the vertical edge of the L-shaped supporting base 210. The Z-direction moving member is mounted on the Z-direction sliding table base; as shown in Fig.6, the parallel tracks on one side of the Z-direction sliding table base and the groove on one side of the Z-direction moving member 29 slide fit to implement the detecting system free movement along the Z direction. Through the connection mentioned above, a precision three axial orthogonal displacement platform is established. Preferably, the platform base 26 is fixed on the filling plate 23 by the third bolts 25. The filling plate 23 is fixed on the supporting plate of the following-up platform 22 by the second bolts 24. The supporting plate of the following-up platform 22 is fixed on the bottom of the mounting platform 11 by the first bolts 21. The purpose of increasing filling plate 23 is to reduce the processing difficulty in ensuring the overall flatness of the following-up platform 2.

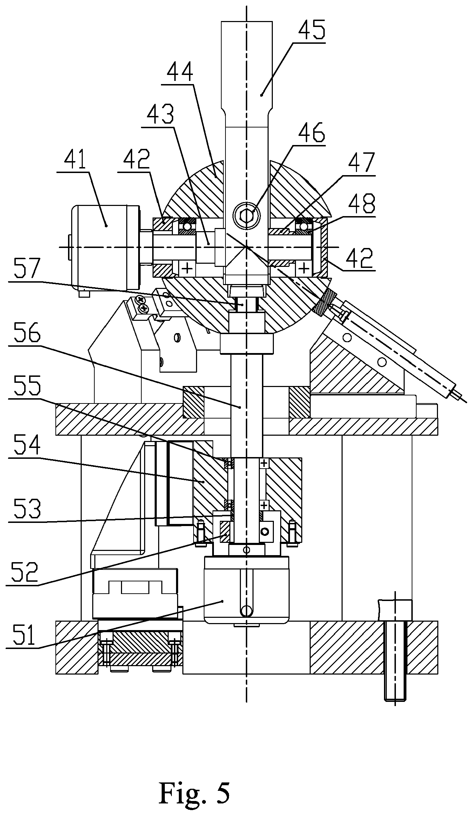

As shown in Fig. 5, the rotation angle measuring device 5 is used to measure the rotation angle of machine tool under test around the Z axis in the coordinate system of the machine table. The rotation angle measuring device 5 consists of a first photoelectric encoder 51, a locking sleeve 52, a connecting shaft collar 53, a connecting shaft installing base 54, at least a first bearing 55, a connecting shaft 56 and a hexagon socket shoulder screw 57. The connecting shaft installing base 54 is mounted on the Z-direction moving member 29 of the following-up platform 2. The connecting shaft 56 is installed on the connecting shaft installing base 54 via arranged two first bearings 55. The connecting shaft collar 53 and the locking sleeve 52 are installed on the connecting shaft 56 to locate the two first bearings 55 axially. The lower end of the connecting shaft 56 is fixedly connected with the hollow shaft of the first photoelectric encoder 51. The first photoelectric encoder 51 is fixed on the connecting shaft installing base 54. The upper end of the connecting shaft 56 is fixedly connected with the swing angle measuring device 4 through the hexagon socket shoulder screw 57. During measurement, the rotation angle of machine tool chuck under test around the Z axis in the coordinate system of the machine table, will be transmitted to the connecting shaft 56. Then, the rotation angle will be measured by the first photoelectric encoder 51. Ultimately, the rotation angle of machine tool's chuck under test, which is the rotation angle θ of machine tool under test around the Z axis in the coordinate system of the machine table, is obtained.

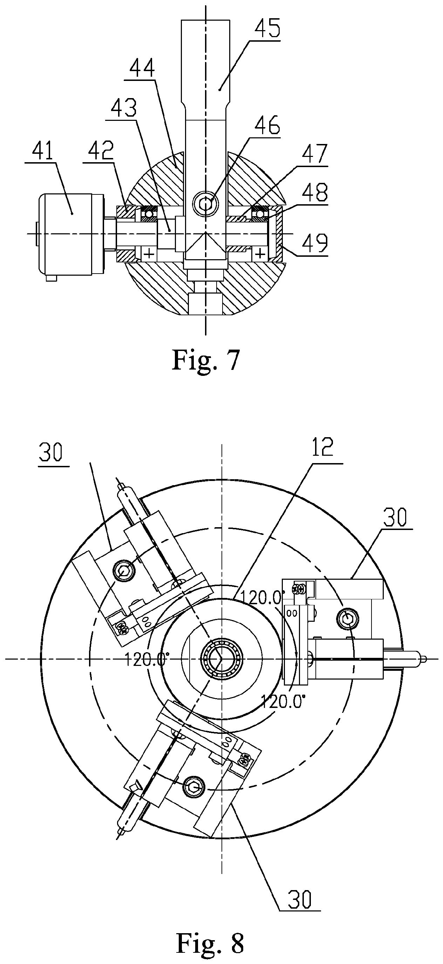

The swing angle measuring device 4 and the rotation angle measuring device 5 are fixedly connected with each other. Their internal details are shown in Fig. 5. As shown in Fig. 7, the swing angle measuring device 4 consists of a second photoelectric encoder 41, a left bearing cap 42, a mandrel 43, a spherical connector 44, a swing shaft 45, a fastening bolt 46, a collar 47, two second bearings 48. The upper end of the connecting shaft 56 is put into the inner hole of the spherical connector 44, and they are fixedly connected by the hexagon socket shoulder screw 57. The mandrel 43 is installed inside the spherical connector 44 via two second bearings 48, and the axis of the mandrel 43 through the centre of the spherical connector 44. One end of the swing shaft 45 is fixed on the mandrel 43 via the fastening bolt 46 to keep their axes perpendicular to each other. The collar 47 is employed to place the swing shaft 45. Two second bearings 48 are respectively installed on the bearing journals of the mandrel 43 from both sides, and two bearings caps (left bearing cap 42 and right bearing cap49) are used to position axially, so that the intersection of the axes of the mandrel 43 and the swing shaft 45 coincides with the centre of the spherical connector 44. The left bearing cap 42 and the right bearing cap 49 are respectively thick type and thin type, and they are respectively mounted on both sides of the spherical connector 44. One end of the mandrel 43 extending from the inner hole of the left bearing cap 42 is fixedly connected to the hollow shaft of the second photoelectric encoder 41. The second photoelectric encoder 41, which is fixed on the left bearing cap 42, is used to measure the swing angle of the mandrel 43. During measuring, the free end of the swing shaft 45 is fixedly connected to tool chuck of the machine tool under test. Swing angle of tool, which is the swing angle of the tool chuck, is transmitted to the mandrel 43 through the swing shaft 45. The swing angle η of tool chuck on the machine tool under test is detected as the rotation angle of the mandrel 43 measured by the second photoelectric encoder 41.

As shown in Fig. 8, the spatial displacement measuring device 3 consists of three displacement measurement units 30 with the same structure. They are installed on the upper table of the mounting platform 11. The displacement measurement unit 30 consists of a contact plate 31, a flexible hinge 32, a fixed dip angle base 33 and a displacement sensor 34. The fixed dip angle base 33 is mounted on the upper table of the mounting platform 11. In order to position the displacement measurement unit 30 along the radial direction, the external cylindrical surfaces of the locating ring 12 contacts to the inner side of the fixed dip angle base 33. To ensure that the three fixed dip angle bases 33 are placed with 120 degree angle interval on fixed circular, three keyways are cut at the upper table of the mounting platform 11 with 120 degree angle interval. The positioning key 13 is used to make the keyway side on the mounting platform 11 coincide with the keyway side on the bottom of the fixed dip angle base 33 respectively. The displacement sensor 34 is fixed on the fixed dip angle base 33 with certain angle with the horizontal so that the intersection of the axes of the three displacement sensors 34 is placed at the centre of the spherical connector 44. The contact plate 31 is fixed on the fixed dip angle base 33 via flexible hinge 32. In order to ensure that the displacement produced by the spherical connector 44 is transmitted in real time to the contact plate 31 and measured by the displacement sensor 34, one side of the contact plate 31 is in contact with the probe of the displacement sensor 34 and the other side is in contact tangentially with the spherical connector 44. At last, the displacement error of tool tip in coordinate system of the machine tool can be obtained by converting the displacement measured by three displacement measurement units 30 in the coordinate system of the measurement unit into the displacement in the coordinate system of the machine tool.

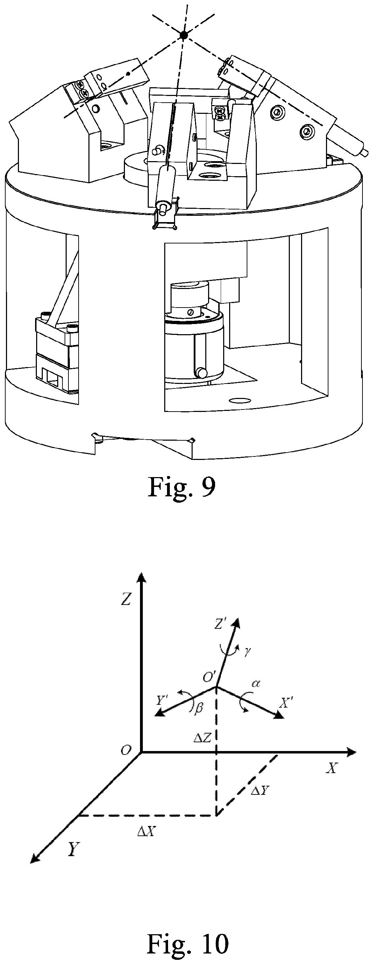

According to the principle of coordinate transformation, there are *O' - X'Y'Z'* and *O - XYZ* two different spatial Cartesian coordinate systems as shown in Fig.10. The coordinate origin of the *O' - X'Y'Z'* is different from that of the *O - XYZ*. There are three translation parameters $\Delta X$, $\Delta Y$, $\Delta Z$ between the two coordinate systems. At the same time, the axes in the *O' - X'Y'Z'* are not respectively parallel to that in the *O - XYZ*, and there are three rotation parameters $\alpha$, $\beta$, $\gamma$ differentiating them. The coordinates of the same point A in the two coordinate systems are different: it is (*X', Y', Z'*) in the *O' - X'Y'Z'*, and (*X, Y, Z*) in the *O - XYZ*. Obviously, these two coordinate systems by coordinate translation and rotation transformation can reach agreement. The conversion relationship between the two coordinates is as follow:

$$\begin{bmatrix} X \\ Y \\ Z \end{bmatrix} = \lambda \cdot R \cdot \begin{bmatrix} X' \\ Y' \\ Z' \end{bmatrix} + \begin{bmatrix} \Delta X \\ \Delta Y \\ \Delta Z \end{bmatrix}$$

Where, $\lambda$ is the scale ratio factor between two coordinates.

$$R=R(\alpha)R(\beta)R(\gamma)$$

$$=\begin{bmatrix} \cos\beta\cos\gamma-\sin\beta\sin\alpha\sin\gamma & -\cos\beta\sin\gamma-\sin\beta\sin\alpha\cos\gamma & -\sin\beta\cos\alpha \\ \cos\alpha\sin\gamma & \cos\alpha\cos\gamma & -\sin\alpha \\ \sin\beta\cos\gamma+\cos\beta\sin\alpha\sin\gamma & -\sin\beta\sin\gamma+\cos\beta\sin\alpha\cos\gamma & \cos\beta\cos\alpha \end{bmatrix}$$

R is the rotational transformation matrix between the two coordinates, $[\Delta X, \Delta Y, \Delta Z]^T$ is translation matrix. Thus, after $\Delta X$, $\Delta Y$, $\Delta Z$, $\alpha$, $\beta$, $\gamma$, $\lambda$ are certain, or the rotation matrix and translation matrix are obtained, transformation between any two spatial Cartesian coordinate systems can be achieved.

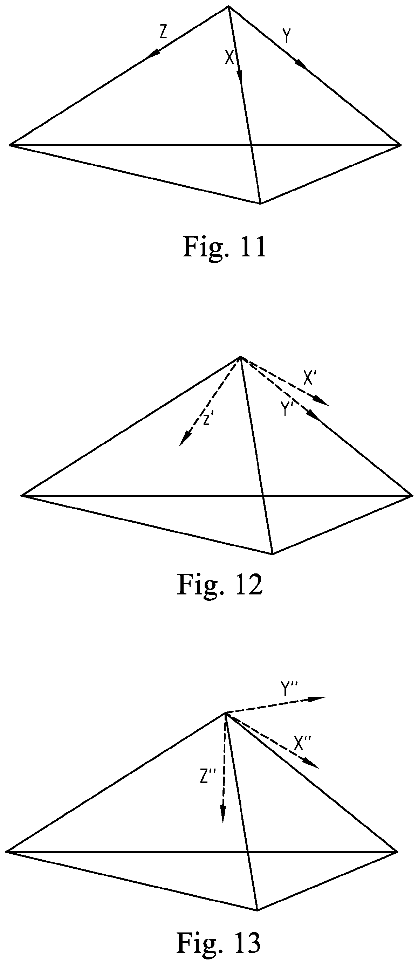

According to the transformation theory mentioned above, the coordinate transformation process in the detecting mechanism is shown in Fig. 11, Fig. 12 and Fig. 13.

Fig. 11 is the local coordinate system of the spatial displacement measuring device 3 in the detecting mechanism. In order to convert the tri-axial displacements measured in the local coordinate system to displacement error value in the coordinate system of machine table, twice rotation transformations in the local coordinate system are needed so that the axes in the local coordinate system are respectively parallel to the ones in the coordinate system of the machine table. Detail rotation transformation process is shown in Fig. 12 and Fig. 13 where firstly the local coordinate system rotates counterclockwise with angle $\beta$ around its Y axis; then, the new coordinate system obtained from the first transformation rotates with angle $\alpha$ around its $X'$ axis; ultimately, the new coordinate system obtained from the second transformation can be consistent with the coordinate system of machine table.

Suppose $\varepsilon_X$, $\varepsilon_Y$, $\varepsilon_Z$ are respectively the displacements measured on the axes of X,Y,Z. Each axial displacement obtained after first rotation transformation is:

$$\begin{bmatrix} \varepsilon_{X'} & \varepsilon_{Y'} & \varepsilon_{Z'} \end{bmatrix} = \begin{bmatrix} \varepsilon_X & \varepsilon_Y & \varepsilon_Z \end{bmatrix} \begin{bmatrix} \cos\beta & 0 & \sin\beta \\ 0 & 1 & 0 \\ -\sin\beta & 0 & \cos\beta \end{bmatrix}$$

After the second coordinate transformation, the displacement of machine tool tip in new coordinate system will be as follow:

$$\begin{bmatrix} \varepsilon_{X''} & \varepsilon_{Y''} & \varepsilon_{Z''} \end{bmatrix} = \begin{bmatrix} \varepsilon_{X'} & \varepsilon_{Y'} & \varepsilon_{Z'} \end{bmatrix} \begin{bmatrix} 1 & 0 & 0 \\ 0 & \cos\alpha & \sin\alpha \\ 0 & -\sin\alpha & \cos\alpha \end{bmatrix}$$

$$= \begin{bmatrix} \varepsilon_X & \varepsilon_Y & \varepsilon_Z \end{bmatrix} \begin{bmatrix} \cos\beta & 0 & \sin\beta \\ 0 & 1 & 0 \\ -\sin\beta & 0 & \cos\beta \end{bmatrix} \begin{bmatrix} 1 & 0 & 0 \\ 0 & \cos\alpha & \sin\alpha \\ 0 & -\sin\alpha & \cos\alpha \end{bmatrix}$$

$$= \begin{bmatrix} \varepsilon_X & \varepsilon_Y & \varepsilon_Z \end{bmatrix} \begin{bmatrix} \cos\beta & -\sin\alpha\sin\beta & \sin\beta\cos\alpha \\ 0 & \cos\alpha & \sin\alpha \\ -\sin\beta & -\sin\alpha\cos\beta & \cos\alpha\cos\beta \end{bmatrix}$$

Each axis in the coordinate system obtained after twice coordinate transformations mentioned above is parallel to its corresponding axis in machine coordinate system. After twice coordinate transformations of the displacements $[\varepsilon_X$ $\varepsilon_Y$ $\varepsilon_Z]$ measured in the local coordinate system with detectors, the tool tip displacement error value in the coordinate system of machine table is obtained $[\varepsilon_{X''}$ $\varepsilon_{Y''}$ $\varepsilon_{Z''}]$ consequently.

In order to make the project of the present invention more clearly, the principle of the present invention will be further described with specific working process of the synchronous detecting mechanism for five-axis machine tool posture and tool tip position error.

Before the RTCP test on five-axis CNC machine tool, the synchronous detecting mechanism is fixed on the machine table by the connecting bolt 14, and coincide with the synchronous detecting mechanism's coordinate origin and the coordinate origin of machine tool workbench. Machine tool is running to make the machine tool chuck is positioned above the coordinate origin of machine table. Next the machine tool chuck is connected to the swing shaft 45. The connection of machine tool with the synchronous detecting mechanism is finished.

After the installation is completed, tool posture of machine tool needs to be finely tuned based on actual installation so that the spherical connector 44 and the three contact plates 31 are in contact. Then the output value of the displacement sensor 34, the second photoelectric encoder 41 and the first photoelectric encoder 51 is initialized. The RTCP function is started and the post instruction is input to CNC system to drive the tool rotation center point moving along a setting trajectory while the tool tip keeps still.

Since the process that the tool rotation center point moves along a setting trajectory during measuring is a composite of axial movements. The swing angle of the tool around an axis is transmitted from the swing shaft 45 to the mandrel 43. The rotation angle of the mandrel 43 is measured by the second photoelectric encoder 41 which is fixed on the spherical connector 44. So the swing angle $\eta$ of tool is detected. During the movement of tool rotation center point, the spherical connector 44 is displaced along each axial space; thus the contact plate 31 in the displacement measurement unit 30 being squeezed. The displacement caused by the contact plate 31 will be measured by the displacement sensor 34 which is located at one side of the contact plate 31. Then, the displacement of tool tip is detected. The rotation of the spherical connector 44 around Z-axis caused by two rotation axes of machine tool is transmitted to the connecting shaft 56 and measured by the first photoelectric encoder 51 which is fixed on the connecting shaft 56. Then, the rotation angle $\theta$ of tool is measured.

In conclusion, in the process of tool rotation center point moving along a setting trajectory, the swing angle $\eta$ and the rotation angle $\theta$ of five-axis CNC machine tool and the spatial tri-axial micro-displacements $\varepsilon_X$, $\varepsilon_Y$, $\varepsilon_Z$ produced by the tool tip may be measured real time synchronously respectively with two photoelectric coders and three displacement sensors. The obtained data can be displayed in real time and recorded immediately in the measurement and control system. The five-axis CNC machine tool posture is represented by swing angle $\eta$ and rotating angle $\theta$. The position error [$\varepsilon_{X''}$ $\varepsilon_{Y''}$ $\varepsilon_{Z''}$] of five-axis CNC machine tool tip will be obtained after the measured data $\varepsilon_X$, $\varepsilon_Y$, $\varepsilon_Z$ through coordinate transformation. Based on the five groups of data, the machine tool tip position error and the machine tool posture in the actual machining process of five-axis CNC machine tool can be reflected. It can be realized by ordinary technicians in this field that the embodiment described herein is intended to assist the reader in the understanding of the theory of the present invention. It needs to be understood that the protection scope of the present invention is not limited to such special statement and embodiment. According to these technology enlightenment published in the present invention, various specific variants and combinations without departing from the nature of the disclosure can be made by ordinary technicians in this field. But these variations and combinations are still within the protection scope of the present invention, as defined by the appended claims.

**Claims**

1. A synchronous detecting mechanism for the tool posture and tool tip position error of five-axis machine tool, including, a mounting device (1), connected with an external machine tool, used to position and install each measuring device and the following-up platform; the mounting device (1) including the mounting platform (11); a spatial displacement measuring device (3), used to measure the micro-displacement of the machine tool tip under test in three orthogonal axes; the spatial displacement measuring device (3) installed on the upper table of the mounting platform (11); **characterized in that**, the mechanism comprises:

    a following-up platform (2), used to form an orthogonal three axial displacement platform; and the following-up platform (2) mounted on the lower table of the mounting platform (11); a rotation angle measuring device (5), used to measure the angle of the machine tool under test around the z axis in the coordinate system of the machine table; the rotation angle measuring device (5) installed on the following platform (2); a swing angle measuring device (4), used to measure the swing angle of the machine tool under test deviating from the z axis in the coordinate system of the machine table; wherein the lower part of the swing angle measuring device (4) is fixedly connected with the upper part of the rotation angle measuring device (5) and the upper part of the swing angle measuring device (4) is connected to the tool chuck of the machine tool under test.

2. The synchronous detecting mechanism for the tool posture and tool tip position error of five-axis machine tool according to Claim 1, **characterized in that** the rotation angle measuring device (5) consists of a first photoelectric coder (51) and a connecting shaft (56); the first photoelectric coder (51) is used to measure the rotation angle of the connecting shaft (56); the upper end of the connecting shaft (56) is fixedly connected with the lower part of the swing angle measuring device (4), and the lower end of the connecting shaft (56) is fixedly connected with the first photoelectric coder (51); the connecting shaft (56) is installed on the following-up platform (2).

3. The synchronous detecting mechanism for the tool posture and tool tip position error of five-axis machine tool according to Claim 2, **characterized in that** the connecting shaft (56) is installed on the connecting shaft installing base (54) via a pair of first bearings (55); the connecting shaft installing base (54) is fixedly installed on the following-up platform (2); a locking sleeve (52) and a connecting shaft collar (53) are respectively sheathed on the connecting shaft (56) and used for axial positioning of the first bearings (55).

4. The synchronous detecting mechanism for the tool posture and tool tip position error of five-axis machine tool according to Claim 2, **characterized in that** the swing angle measuring device (4) includes a second photoelectric coder (41), a mandrel (43), a spherical connector (44) and a swing shaft (45); the second photoelectric coder (41) measures the rotation angle of the mandrel (43); the spherical connector (44) is used to install the mandrel (43) and the swing shaft (45); the mandrel (43) is installed horizontally in the spherical connector (44); one end of the swing shaft (45) is fixed on the mandrel (43) and their axes are perpendicular; the free end of the swing shaft (45) is fixedly connected to the tool chuck of the machine tool under test, and the axes of the swing shaft (45) is through the center of spherical connector (44); the spherical connector (44) is fixedly connected to one end of the connecting shaft (56).

5. The synchronous detecting mechanism for the tool posture and tool tip position error of five-axis machine tool according to Claim 4, **characterized in that** the mandrel (43) is installed in the spherical connector (44) via two second bearings (48); two bearing caps (42,49) of two second bearings (48) are installed separately at the two ends of the mandrel (43) to limit the axial displacement of the mandrel (43); the axial displacement of the swing shaft (45) is limited by a collar (47) for the intersection point of the axes of the mandrel (43) and the swing shaft (45) coincide with the center of the spherical connector (44).

6. The synchronous detecting mechanism for the tool posture and tool tip position error of five-axis machine tool according to Claim 4, **characterized in that** the spatial displacement measuring device (3) includes three displacement measurement units (30) with same design, and each of them is distributed evenly on the same circle of the upper table of the mounting platform (11); the displacement measurement unit (30) includes a fixed dip angle base (33) and a displacement sensor (34); the fixed dip angle base (33) is fixedly installed on the upper table of the mounting platform (11); the displacement sensor (34) is fixed on the fixed dip angle base (33); the measuring head of the displacement sensor contacts with the spherical connector (44), and the sensor axes is through the center of spherical connector (44).

7. The synchronous detecting mechanism for the tool posture and tool tip position error of five-axis machine tool according to Claim 6, **characterized in that** a contact plate (31) is further placed between the measuring head of the displacement sensor (34) and the spherical connector (44); the contact plate (31) is installed on the fixed dip angle base (33) by a flexible hinge (32).

8. The synchronous detecting mechanism for the tool posture and tool tip position error of five-axis machine tool according to Claim 6, **characterized in that** the mounting device (1) further includes a locating ring (12) and several positioning keys (13); the three fixed dip angle bases (33) are fixed at the same circle of the upper table of the mounting platform (11) by the locating ring (12), and the positioning keys (13) make the fixed dip angle bases (33) distribute evenly at the circle.

9. The synchronous detecting mechanism for the tool posture and tool tip position error of five-axis machine tool according to Claim 3, **characterized in that** the following-up platform (2) includes a platform base (26), a Y-direction moving member (212), a X-direction moving member (211), a Z-direction sliding table base (28) and a Z-direction moving member (29); the platform base (26) is fixed on the lower table of the mounting platform (11); Y-direction moving member (212) is installed on the platform base (26); the X-direction moving member (211) is installed on the Y-direction moving member (212); the Z-direction sliding table base (28) is fixedly installed on the X-direction moving member (211); the Z-direction moving member (29) is installed on the Z-direction sliding table base (28); the connecting shaft installing base (54) is fixedly installed on the Z-direction moving member (29).

10. The synchronous detecting mechanism for the tool posture and tool tip position error of five-axis machine tool according to Claim 9, **characterized in that** the platform base (26) is fixed on the lower table of the mounting platform (11) by a supporting plate of the following-up platform (22) and a filling plate (23); the supporting plate of the following-up platform (22) is fixed on the lower table of the mounting platform (11); the filling plate (23) is fixed on the supporting plate of the follow-up platform (22); the platform base (26) is fixed on the filling plate (23); the Z-direction sliding table base (28) is fixed on the X-direction moving member (211) by the L-shaped supporting base(210).

**Patentansprüche**

1. Synchroner Erfassungsmechanismus für den Werkzeuglage- und Werkzeugspitzenpositionsfehler einer fünfachsigen Werkzeugmaschine, der Folgendes umfasst:

    eine Montagevorrichtung (1), die mit einer externen Werkzeugmaschine verbunden ist, die zum Positionieren und Installieren jedes Messgerätes und der Folgeplattform verwendet wird; wobei die Montagevorrichtung (1) die Montageplattform (11) umfasst;
    eine Messvorrichtung (3) der räumlichen Verschiebung, die zum Messen der Mikroverschiebung der zu prüfenden Werkzeugmaschinenspitze in drei orthogonalen Achsen verwendet wird; wobei die Messvorrichtung (3) der räumlichen Verschiebung auf der oberen Auflage der Montageplattform (11) installiert ist;

    **dadurch gekennzeichnet, dass** der Mechanismus Folgendes umfasst:

    eine Folgeplattform (2), die zum Bilden einer orthogonalen dreiachsigen Verschiebungsplattform verwendet wird; und wobei die Folgeplattform (2) auf die untere Auflage der Montageplattform (11) montiert ist;
    eine Drehwinkelmessvorrichtung (5), die zum Messen des Winkels der zu prüfenden Werkzeugmaschine um die Z-Achse im Koordinatensystem des Maschinentisches verwendet wird; wobei die Drehwinkelmessvorrichtung (5) auf der Folgeplattform (2) installiert ist;
    eine Schwenkwinkelmessvorrichtung (4), die zum Messen des Schwenkwinkels der zu prüfenden Werkzeugmaschine, der von der z-Achse in dem Koordinatensystem des Maschinentisches abweicht, verwendet wird; wobei der untere Teil der Schwenkwinkelmessvorrichtung (4) fest mit dem oberen Teil der Drehwinkelmessvorrichtung (5) verbunden ist und der obere Teil der Schwenkwinkelmessvorrichtung (4) mit der Werkzeugspannvorrichtung der zu prüfenden Werkzeugmaschine verbunden ist.

2. Synchroner Erfassungsmechanismus für den Werkzeuglage- und Werkzeugspitzenpositionsfehler einer fünfachsigen Werkzeugmaschine nach Anspruch 1, **dadurch gekennzeichnet, dass** die Drehwinkelmessvorrichtung (5) aus einem ersten photoelektrischen Geber (51) und einer Verbindungswelle (56) besteht; wobei der erste photoelektrische Geber (51) zum Messen des Drehwinkels der Verbindungswelle (56) verwendet wird; wobei das obere Ende der Verbindungswelle (56) fest mit dem unteren Teil der Schwenkwinkelmessvorrichtung (4) verbunden ist, und das untere Ende der Verbindungswelle (56) fest mit dem ersten photoelektrischen Geber (51) verbunden ist; wobei die Verbindungswelle (56) auf der Folgeplattform (2) installiert ist.

3. Synchroner Erfassungsmechanismus für den Werkzeuglage- und Werkzeugspitzenpositionsfehler einer fünfachsigen Werkzeugmaschine nach Anspruch 2, **dadurch gekennzeichnet, dass** die Verbindungswelle (56) auf der Verbindungswellen-Installationsbasis (54) über ein Paar erster Lager (55) installiert ist; wobei die Verbindungswellen-Installationsbasis (54) fest auf der Folgeplattform (2) installiert ist; wobei eine Arretierungshülse (52) und ein Verbindungswellenbund (53) jeweils die Verbindungswelle (56) umgeben und zum axialen Positionieren der ersten Lager (55) verwendet werden.

4. Synchroner Erfassungsmechanismus für den Werkzeuglage- und Werkzeugspitzenpositionsfehler einer fünfachsigen Werkzeugmaschine nach Anspruch 2, **dadurch gekennzeichnet, dass** die Schwenkwinkelmessvorrichtung (4) einen zweiten photoelektrischen Geber (41), einen Dorn (43), ein kugelförmiges Anschlussstück (44) und eine Schwenkwelle (45) umfasst; wobei der zweite photoelektrische Geber (41) den Drehwinkel des Dorns (43) misst; wobei das kugelförmige Anschlussstück (44) zum Installieren des Dorns (43) und der Schwenkwelle (45) verwendet wird; wobei der Dorn (43) horizontal im kugelförmigen Anschlussstück (44) installiert ist; wobei ein Ende der Schwenkwelle (45) auf dem Dorn (43) befestigt ist und ihre Achsen senkrecht zueinander verlaufen; wobei das freie Ende der Schwenkwelle (45) fest mit der Werkzeugspannvorrichtung der zu prüfenden Werkzeugmaschine verbunden ist, und die Achse der Schwenkwelle (45) durch die Mitte des kugelförmigen Anschlussstücks (44) verläuft; wobei das kugelförmige Anschlussstück (44) fest mit einem Ende der Verbindungswelle (56) verbunden ist.

**5.** Synchroner Erfassungsmechanismus für den Werkzeuglage- und Werkzeugspitzenpositionsfehler einer fünfachsigen Werkzeugmaschine nach Anspruch 4, **dadurch gekennzeichnet, dass** der Dorn (43) über zwei zweite Lager (48) im kugelförmigen Anschlussstück (44) installiert ist; wobei zwei Lagerdeckel (42, 49) der zwei zweiten Lager (48) getrennt an den beiden Enden des Dorns (43) installiert sind, um die axiale Verschiebung des Dorns (43) zu begrenzen; wobei die axiale Verschiebung der Schwenkwelle (45) durch einen Bund (47) für den Schnittpunkt der Achsen des Dorns (43) und der Schwenkwelle (45) begrenzt ist, die mit der Mitte des kugelförmigen Anschlussstücks (44) zusammenfallen.

**6.** Synchroner Erfassungsmechanismus für den Werkzeuglage- und Werkzeugspitzenpositionsfehler einer fünfachsigen Werkzeugmaschine nach Anspruch 4, **dadurch gekennzeichnet, dass** die Messvorrichtung (3) der räumlichen Verschiebung drei Verschiebungsmesseinheiten (30) von gleicher Ausgestaltung aufweist, und wobei jede davon gleichmäßig auf demselben Kreis der oberen Auflage der Montageplattform (11) verteilt ist; wobei die Verschiebungsmesseinheit (30) eine feste Eintauchwinkelbasis (33) und einen Verschiebungssensor (34) umfasst; wobei die feste Eintauchwinkelbasis (33) fest auf der oberen Auflage der Montageplattform (11) installiert ist; wobei der Verschiebungssensor (34) auf der festen Eintauchwinkelbasis (33) befestigt ist; wobei der Messkopf des Verschiebungssensors das kugelförmige Anschlussstück (44) berührt, und die Sensorachse durch die Mitte des kugelförmigen Anschlussstücks (44) verläuft.

**7.** Synchroner Erfassungsmechanismus für den Werkzeuglage- und Werkzeugspitzenpositionsfehler einer fünfachsigen Werkzeugmaschine nach Anspruch 6, **dadurch gekennzeichnet, dass** ferner eine Kontaktplatte (31) zwischen dem Messkopf des Verschiebungssensors (34) und dem kugelförmigen Anschlussstück (44) angeordnet ist; wobei die Kontaktplatte (31) durch ein flexibles Gelenk (32) auf der festen Eintauchwinkelbasis (33) installiert ist.

**8.** Synchroner Erfassungsmechanismus für den Werkzeuglage- und Werkzeugspitzenpositionsfehler einer fünfachsigen Werkzeugmaschine nach Anspruch 6, **dadurch gekennzeichnet, dass** die Montagevorrichtung (1) ferner einen Zentrierring (12) und mehrere Positionierungskeile (13) umfasst; wobei die drei festen Eintauchwinkelbasen (33) durch den Zentrierring (12) an demselben Kreis der oberen Auflage der Montageplattform (11) befestigt sind, und die Positionierungskeile (13) dafür sorgen, dass die festen Eintauchwinkelbasen (33) gleichmäßig auf dem Kreis verteilt sind.

**9.** Synchroner Erfassungsmechanismus für den Werkzeuglage- und Werkzeugspitzenpositionsfehler einer fünfachsigen Werkzeugmaschine nach Anspruch 3, **dadurch gekennzeichnet, dass** die Folgeplattform (2) eine Plattformbasis (26), ein in Y-Richtung bewegliches Element (212), ein in X-Richtung bewegliches Element (211), eine in Z-Richtung gleitende Tischbasis (28) und ein in Z-Richtung bewegliches Element (29) umfasst; wobei die Plattformbasis (26) auf der unteren Auflage der Montageplattform (11) befestigt ist; wobei das in Y-Richtung bewegliche Element (212) auf der Plattformbasis (26) installiert ist; wobei das in X-Richtung bewegliche Element (211) auf dem in Y-Richtung beweglichen Element (212) installiert ist; wobei die in Z-Richtung gleitende Tischbasis (28) fest auf dem in X-Richtung beweglichen Element (211) installiert ist; wobei das in Z-Richtung bewegliche Element (29) auf der in Z-Richtung gleitenden Tischbasis (28) installiert ist; wobei die Verbindungswellen-Installationsbasis (54) fest auf dem in Z-Richtung beweglichen Element (29) installiert ist.

**10.** Synchroner Erfassungsmechanismus für den Werkzeuglage- und Werkzeugspitzenpositionsfehler einer fünfachsigen Werkzeugmaschine nach Anspruch 9, **dadurch gekennzeichnet, dass** die Plattformbasis (26) auf der unteren Auflage der Montageplattform (11) durch eine Stützplatte der Folgeplattform (22) und eine Füllplatte (23) befestigt ist; wobei die Stützplatte der Folgeplattform (22) auf der unteren Auflage der Montageplattform (11) befestigt ist; wobei die Füllplatte (23) auf der Stützplatte der Folgeplattform (22) befestigt ist; wobei die Plattformbasis (26) auf der Füllplatte (23) befestigt ist; wobei die in Z-Richtung gleitende Tischbasis (28) auf dem in X-Richtung beweglichen Element (211) durch die L-förmige Stützbasis (210) befestigt ist.

**Revendications**

**1.** Mécanisme de détection synchrone de la position d'outil et l'erreur de position de pointe d'outil d'un outil de machine à cinq axes, incluant

un dispositif de montage (1), raccordé à un outil de machine externe, utilisé pour positionner et installer chaque dispositif de mesure et la plate-forme de suivi ; le dispositif de montage (1) incluant la plate-forme de montage (11);
un dispositif de mesure de déplacement spatial (3), utilisé pour mesurer le micro-déplacement de la pointe d'outil de machine sous test dans trois axes orthogonaux ; le dispositif de mesure de déplacement spatial (3) installé sur le plateau supérieur de la plate-forme de montage (11);

**caractérisé en ce que** le mécanisme comprend :

une plate-forme de suivi (2), utilisée pour former une plate-forme de déplacement à trois axes orthogonale ; et la plate-forme de suivi (2) étant montée sur le plateau inférieur de la plate-forme de montage (11);

un dispositif de mesure d'angle de rotation (5), utilisé pour mesurer l'angle de l'outil de machine sous test autour de l'axe z dans le système de coordonnées du plateau de machine ; le dispositif de mesure d'angle de rotation (5) étant installé sur la plate-forme de suivi (2) ;

un dispositif de mesure d'angle de giration(4), utilisé pour mesurer l'angle de giration de l'outil de machine sous test déviant de l'axe z dans le système de coordonnées du plateau de machine ; dans lequel la partie inférieure du dispositif de mesure d'angle de giration (4) est raccordée fixement à la partie supérieure du dispositif de mesure d'angle de rotation (5) et la partie supérieure du dispositif de mesure d'angle de giration (4) est raccordée au mandrin porte-outil de l'outil de machine sous test.

2. Mécanisme de détection synchrone de la position d'outil et l'erreur de position de pointe d'outil d'un outil de machine à cinq axes selon la revendication 1, **caractérisé en ce que** le dispositif de mesure d'angle de rotation (5) est composé d'un premier codeur photoélectrique (51) et un arbre de raccordement (56); le premier codeur photoélectrique (51) est utilisé pour mesurer l'angle de rotation de l'arbre de raccordement (56) ; l'extrémité supérieure de l'arbre de raccordement (56) est raccordée fixement à la partie inférieure du dispositif de mesure d'angle de giration (4) et la partie inférieure de l'arbre de raccordement (56) est raccordée fixement au premier codeur photoélectrique (51) ; l'arbre de raccordement (56) est installé sur la plate-forme de suivi.

3. Mécanisme de détection synchrone de la position d'outil et l'erreur de position de pointe d'outil d'un outil de machine à cinq axes selon la revendication 2, **caractérisé en ce que** l'arbre de raccordement (56) est installé sur la base d'installation d'arbre de raccordement (54) via une paire de premiers paliers (55) ; la base d'installation d'arbre de raccordement (54) est installée fixement sur la plate-forme de suivi (2) ; un manchon de verrouillage (52) et un collier d'arbre de raccordement (53) sont respectivement emmanchés sur l'arbre de raccordement (56) et utilisés pour le positionnement axial des premiers paliers (55).

4. Mécanisme de détection synchrone de la position d'outil et l'erreur de position de pointe d'outil d'un outil de machine à cinq axes selon la revendication 2, **caractérisé en ce que** le dispositif de mesure d'angle de giration (4) inclut un second codeur photoélectrique (41), un mandrin (43), un connecteur sphérique (44) et un arbre oscillant (45) ; le second codeur photoélectrique (41) mesure l'angle de rotation du mandrin (43) ; le connecteur sphérique (44) est utilisé pour installer le mandrin (43) et l'arbre oscillant (45) ; le mandrin (43) est installé horizontalement das le connecteur sphérique (44) ; une extrémité de l'arbre oscillant (45) est fixée sur le mandrin (43) et leurs axes sont perpendiculaires ; l'extrémité libre de l'arbre oscillant (45) est raccordée fixement au mandrin porte-outil de l'outil de machine sous test et l'axe de l'arbre oscillant (45) passe à travers le centre du connecteur sphérique (44) ; le connecteur sphérique (44) est raccordé fixement à une extrémité de l'arbre de raccordement (56).

5. Mécanisme de détection synchrone de la position d'outil et l'erreur de position de pointe d'outil d'un outil de machine à cinq axes selon la revendication 4, **caractérisé en ce que** le mandrin (43) est installé dans le connecteur sphérique (44) via deux seconds paliers (48) ; deux chapeaux de palier (42,49) de deux seconds paliers (48) sont installés séparément aux deux extrémités du mandrin (43) afin de limiter le déplacement axial du mandrin (43) ; le déplacement axial de l'arbre oscillant (45) est limité par un collier (47) pour que le point d'intersection des axes du mandrin (43) et de l'arbre oscillant (45) coïncide avec le centre du connecteur sphérique (44).

6. Mécanisme de détection synchrone de la position d'outil et l'erreur de position de pointe d'outil d'un outil de machine à cinq axes selon la revendication 4, **caractérisé en ce que** le dispositif de mesure de déplacement spatial (3) inclut trois unités de mesure de déplacement (30) avec la même conception, et dont chacune est répartie uniformément sur le même cercle du plateau supérieur de la plate-forme de montage (11); l'unité de mesure de déplacement (30) inclut une base à angle de pendage fixe (33) et un capteur de déplacement (34) ; la base à angle de pendage fixe (33) est installée fixement sur le plateau supérieur de la plate-forme de montage (11); le capteur de déplacement (34) est fixé sur la base à angle de pendage fixe (33) ; la tête de mesure du capteur de déplacement (34) contacte le connecteur sphérique (44) et les axes de capteur passent à travers le centre du connecteur sphérique (44).

7. Mécanisme de détection synchrone de la position d'outil et l'erreur de position de pointe d'outil d'un outil de machine à cinq axes selon la revendication 6, **caractérisé en ce que** une plaque de contact (31) est en outre placée entre la tête de mesure du capteur de déplacement (34) et le connecteur sphérique (44) ; la plaque de contact (31) est installée sur la base à angle de pendage fixe (33) par une charnière flexible (32).

8. Mécanisme de détection synchrone de la position d'outil et l'erreur de position de pointe d'outil d'un outil de machine à cinq axes selon la revendication 6, **caractérisé en ce que** le dispositif de montage (1) inclut en outre une bague d'arrêt (12) et plusieurs clavettes de positionnement (13) ; les trois bases à angle de pendage fixe (33) sont fixées au niveau du même cercle du plateau supérieur de la plate-forme de montage (11) par la bague d'arrêt (12) et les clavettes de positionnement (13) répartissent uniformément les bases à angle de pendage fixe(33) au niveau du cercle.

9. Mécanisme de détection synchrone de la position d'outil et l'erreur de position de pointe d'outil d'un outil de machine à cinq axes selon la revendication 3, **caractérisé en ce que** la plate-forme de suivi (2) inclut une base de plate-forme (26), un élément mobile dans la direction Y (212), un élément mobile dans la direction X (211), une base de plateau coulissant dans une direction Z (28) et un élément mobile dans une direction Z (29) ; la base de plate-forme (26) est fixée sur la plateau inférieur de la plate-forme de montage (11); un élément mobile dans la direction Y(211) est installé sur l'élément mobile dans la direction Y (212) ; la base de plateau coulissant dans la direction $\mu Z$ (28) est installée fixement sur l'élément mobile dans la direction X (211); l'élément mobile dans la direction Z (29) est installé sur la base de plateau coulissant dans la direction Z (28); la base d'installation d'arbre de raccordement (54) est installée fixement sur l'élément mobile dans la direction Z (29).

10. Mécanisme de détection synchrone de la position d'outil et l'erreur de position de pointe d'outil d'un outil de machine à cinq axes selon la revendication 9, **caractérisé en ce que** la base de plate-forme (26) est fixée sur le plateau inférieur de la plate-forme de montage (11) par un plateau de soutien de la plate-forme de suivi (22) et un plateau de remplissage (23) ; le plateau de soutien de la plate-forme de suivi (22) est fixé sur le plateau inférieur de la plate-forme de montage (11); le plateau de remplissage (23) est fixé sur le plateau de soutien de la plate-forme de suivi (22) ; la base de plate-forme (26) est fixée sur le plateau de soutien de la plate-forme de suivi (22) ; la base de plate-forme (26) est fixé sur le plateau de remplissage (23) ; la base de plateau coulissant dans la direction Z (28) est fixée sur l'élément mobile dans la direction X (211) par la base de soutien en forme de L (210).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**EP 3 238 875 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2390622 A